(19) Europäisches Patentamt
European Patent Office
Office européen des brevets

(11) Veröffentlichungsnummer: **0 178 531**
**B1**

# (12) EUROPÄISCHE PATENTSCHRIFT

(45) Veröffentlichungstag der Patentschrift: **18.01.89**

(51) Int. Cl.⁴: **C 09 D 5/44**

(21) Anmeldenummer: **85112448.7**

(22) Anmeldetag: **02.10.85**

(54) **Wässriges Elektrotauchlack-Überzugsmittel und dessen Verwendung zum Beschichten von Gegenständen.**

(30) Priorität: **04.10.84 DE 3436345**

(43) Veröffentlichungstag der Anmeldung: **23.04.86 Patentblatt 86/17**

(45) Bekanntmachung des Hinweises auf die Patenterteilung: **18.01.89 Patentblatt 89/3**

(84) Benannte Vertragsstaaten: **AT BE CH DE FR GB IT LI NL SE**

(56) Entgegenhaltungen:
**EP-A- 0 004 090**
**DE-A- 2 131 060**
**FR-A- 2 068 616**
**US-A- 4 252 703**

(73) Patentinhaber: **Herberts Gesellschaft mit beschränkter Haftung, Christbusch 25, D-5600 Wuppertal 2 (DE)**

(72) Erfinder: **Patzschke, Hans-Peter, Dr. Ing., Am Heckendorn 71, D-5600 Wuppertal 2 (DE)**
Erfinder: **Cerny, Peter Wolfgang, Dipl.-Ing., Mozart-Strasse 48, D-5600 Wuppertal 1 (DE)**
Erfinder: **Saatweber, Dietrich, Dr. rer. nat., Forststrasse 21, D-5600 Wuppertal 22 (DE)**
Erfinder: **Hendrikx, Georg Hans Ludwig, Dr. rer. nat., Nordrather Strasse 76, D-5620 Velbert 15 (DE)**
Erfinder: **Stransky, Karlheinz, Dipl.-Ing., Lentze-Strasse 38, D-5600 Wuppertal 2 (DE)**

(74) Vertreter: **Türk, Gille, Hrabal, Bruckner Strasse 20, D-4000 Düsseldorf 13 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein vorzugsweise kathodisch abscheidbares wässriges Elektrotauchlack-Überzugsmittel, das ein durch Protonisieren mit Säuren wasserverdünnbares organisches Kunstharz-Bindemittel, enthaltend eine organische aminhaltige Kunstharzkomponente und Vernetzungsmittel, sowie Katalysatoren für die thermische Vernetzung und gegebenenfalls Pigmente, Füllstoffe, Korrosionsinhibitoren, übliche Lackhilfsmittel und, in einer Menge bis zu 20 Gew.-%, bezogen auf das Gesamtgewicht des Überzugsmittels, organische Lösemittel enthält. Die Erfindung betrifft auch die Verwendung eines solchen Überzugsmittels zum Beschichten von Gegenständen mit elektrisch leitender Oberfläche. Diese Gegenstände werden in das Bad des Elektrotauchlack-Überzugsmittels getaucht, und in einem elektrischen Feld scheidet sich das Überzugsmittel auf dem als Kathode geschalteten zu beschichtenden Gegenstand ab.

Derartige Elektrotauchlack-Überzugsmittel werden grosstechnisch eingesetzt. Sie werden auch als Elektrophorese-Lacke oder EC-Lacke bezeichnet. Als EC-Lacke mit hohem Umgriff und sehr gutem Korrosionsschutz, auch auf nicht-phosphatierten Blechen, werden in der Praxis heute Amino-Epoxidharze eingesetzt, die aus Epoxidharzen auf Basis Bisphenol A und Aminen und/oder Aminoalkoholen hergestellt werden.

Die thermische Vernetzung dieser Bindemittel erfolgt nach unterschiedlichen Verfahren, z. B. durch Reaktionen mit blockierten Polyisocyanaten (DE-A-2 057 799, DE-A-2 131 060, DE-A-2 252 536, DE-A-2 265 195, DE-A-2 363 074, DE-A-2 634 211) oder durch Zusatz von umesterungsfähigen Vernetzungsmitteln (EP-A-0 004 090, EP-A-0 012 463, EP-A-0 040 867, EP-A-0 066 859, EP-A-0 082 291, DE-A-3 103 642, DE-A-3 224 684, DE-A-3 315 469, US-A-4 252 703). Je nach Anforderungen der Kunden werden dabei nicht alle Wünsche an die Eigenschaften des Lackes erfüllt. Harzsysteme mit blockierten Polyisocyanaten haben generell den Nachteil, dass sie bei den notwendigen hohen Härtungstemperaturen grosse Einbrennverluste haben und damit die Umwelt verunreinigen. Niedrigmolekulare Alkohole wie Methanol oder Ethanol können nicht als Verkappungsmittel eingesetzt werden, weil deren Urethane unterhalb etwa 250 °C stabil sind. An Harzen, die nach dem Umesterungsverfahren vernetzt werden, beobachtet man eine zu geringe Haftung und ungenügende Detergentienbeständigkeit verbunden mit starker Bläschenbildung.

Bei der Herstellung von farbtonbeständigen Zweischichtlackierungen, wie sie für die Hausgeräte-Industrie eingesetzt werden, haben beide Systeme die unangenehme Eigenschaft, beim Einbrennen des Decklackes, wenn dabei eine höhere Einbrenntemperatur angewandt werden muss, als für die Grundierung notwendig ist, durch Crackprodukte, die aus der Grundierung stammen, stark zu vergilben. Manchmal werden sogar wolkenartige Farbtonveränderungen im Decklack erzeugt, die das optimale Erscheinungsbild der Deckschicht stören. Andere weniger vergilbende Bindemittelsysteme des Stands der Technik auf Basis Amino-Poly(meth)acrylharz oder Amino-Polyurethanharz zeigen bisher nicht das hohe Korrosionsschutzniveau, wie es in der Autoindustrie mit Amino-Epoxidharzen erreicht wird. Mit Hilfe der bisher eingesetzten Grundiersysteme ist es aufgrund ihrer Eigenschaften nicht möglich, für diesen Anwendungszweck unter Einsparung des Füllers eine gute Zweischichtlackierung zu erhalten.

Der Erfindung liegt die Aufgabe zugrunde, kathodisch abscheidbare wässrige Elektrotauchlack-Überzugsmittel zu finden, die gegenüber den bekannten Überzugsmitteln Verbesserungen hinsichtlich der oben beschriebenen Nachteile zeigen.

Es wurde nun überraschenderweise gefunden, dass diese Aufgabenstellung dadurch gelöst werden kann, dass als Vernetzungsmittel nicht nur blockierte Polyisocyanate oder umesterungsfähige Vernetzungsmittel eingesetzt werden, sondern Gemische aus diesen beiden Vernetzungsmitteln in bestimmten Mischungsverhältnissen.

Gegenstand der Erfindung sind demgemäss kathodisch abscheidbare wässrige Elektrotauchlack-Überzugsmittel und deren Verwendung zum Beschichten von Gegenständen mit elektrisch leitenden Oberflächen gemäss den Patentansprüchen.

Als Basisharz oder Komponente (A) der Bindemittelmischung können auf diesem technischen Gebiet bekannte primäre und/oder sekundäre Hydroxylgruppen und primäre, sekundäre und/oder tertiäre Aminogruppen enthaltende Kunstharz-Bindemittel wie Amino-Epoxidharze, Amino-Poly(meth)-acrylatharze und/oder Amino-Polyurethanharze mit einer Hydroxylzahl von 50 bis 400 (mg KOH/g Festharz), einer Aminzahl von 30 bis 150 (mg KOH/g Festharz) und einer mittleren Molmasse ($\bar{M}n$) von 250 bis 10 000 verwendet werden. Der Einsatz von Amino-Epoxidharzen wird für Grundierungen mit hohem Korrosionsschutzniveau bevorzugt.

Das Kunstharz-Bindemittel (A) enthält mindestens eine Aminogruppe pro Molekül. Die untere Grenze der Aminzahl sollte bevorzugt 45, besonders bevorzugt 70, die obere Grenze dagegen sollte bevorzugt bei 120, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so entsteht eine schlecht haftende Filmbildung bei der Abscheidung oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidylether, Polyglycidylester, Polyglycidylamine und Polyglycidyl(meth)acrylate mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmässig aus Polyglycidylethern mit mindestens einer, bevorzugt zwei, 1,2-Epoxidgruppen pro Molekül erhalten. Unter Polyglycidylether im Rahmen dieser Erfindung werden vorzugsweise solche Polyglycidylether der allgemeinen Formel

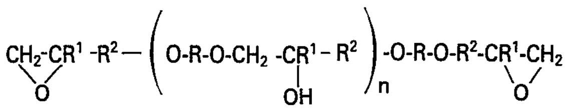

mit

R =

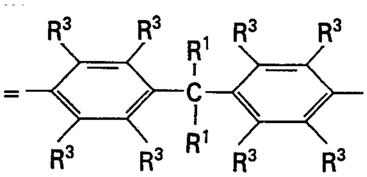

$R^1$ = H und/oder $-C_mH_{2m+1}$
$R^2$ = $-(CR^1_2)_m-$, bevorzugt $-CH_2-$
$R^3$ = $-R^1$, Halogen oder bevorzugt -H
n = 0 bis 8, bevorzugt 1 bis 6
m = 1 bis 8, bevorzugt 1
verstanden.

Diese Polyglycidylether haben eine mittlere Molmasse (Mn) von etwa 300 bis 5000 und ein Epoxid-Äquivalentgewicht von etwa 170 bis 2500. Solche Harze sind Umsetzungsprodukte von Epichlorhydrin mit Dihydroxy-diphenylmethan (Bisphenol F) oder Dihydroxy-diphenylpropan (Bisphenol A), sowie auch Dihydroxy-benzophenon oder Dihydroxy-naphthalin. Polyepoxide mit geeignetem Molekulargewicht werden entweder durch Auswahl der Mol-Verhältnisse von Bisphenol und Epichlorhydrin oder durch Reaktion der monomeren Diglycidylverbindung mit weiterem Bisphenol hergestellt.

Die Epoxidharze können vollständig oder teilweise hydriert sein oder in Gemischen mit unterschiedlicher Struktur und Molmasse eingesetzt werden. So wird zum Elastifizieren ein Teil des beschriebenen Polyglycidylethers durch aliphatische Polyglycidylether der Formel

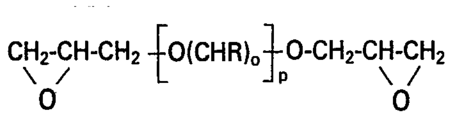

ersetzt, wobei R = H oder ein niedriger, gegebenenfalls mit verschiedenen Substituenten versehener Alkylrest ist und o = 2 bis 6 und p = 5 bis 50 bedeutet. Beispiele sind Polypropylenglykol oder Polybutylenglykol mit verschiedenem Molekulargewicht. Die modifizierten Epoxidharze können auch durch Reaktion mit langkettigen Polyalkoholen wie Hexandiol-1,6, Neopentylglykol, Bis-ethoxyliertes Neopentylglykol, Hydroxypivalinsäureneopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen umgesetzt sein. Während Polyalkohole mit primären OH-Gruppen sich bei geeigneter Katalyse direkt mit Polyglycidylethern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen zwei Mol Polyglycidylether unter Vergrösserung des Molekulargewichts und der Funktionalität eingebaut werden.

Das Amino-Epoxidharz kann auch zum Senken der Aminzahl mit gesättigten oder ungesättigten Polycarbonsäuren und/oder Hydroxycarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure oder dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Polyepoxidverbindungen verwendet werden, wie 1,3-Diglycidyl-5,5-dimethylhydantoin, Triglycidylisocyanurat oder Diepoxide aus Bisimiden. Eine andere geeignete Klasse von Polyepoxiden sind Polyglycidylether von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Vorteilhafterweise können auch Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-2 707 405) entstehen.

Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, Dimethylaminopropylamin, N-Methylaminoethanol oder Diethanolamin. Beim Einsatz von primären Aminen wie Octylamin, Monoethanolamin, Dimethylaminopropylamin, Diethylaminoethylamin, Dimethylaminoneopentylamin oder Methoxypropylamin reagiert das Amin mit der Epoxidgruppe in Abhängigkeit von den angebotenen stöchiometrischen Verhältnissen mit ein bis zwei Epoxidgruppen unter Molekülvergrösserung. Mit sekundären Diaminen tritt eine Kettenverlängerung ein. Als sekundäre Diamine, bevorzugt langkettige Diamine, werden N,N'-Dialkyldiaminoalkane oder Umsetzungsprodukte von gesättigten Glycidylethern oder -estern mit primären Diamino-alkanen verwendet wie das Additionsprodukt von Hexandiamin-1,6 mit 2 Mol Glycidylester der Versaticsäure®. Die geeignete Zahl an Hydroxylgruppen entsteht dabei einmal automatisch aus der Epoxidgruppe bei der Addition der sekundären Aminogruppen, zum anderen kann sie durch Einsatz von Hydroxylalkylaminen gesteuert werden.

Die Molverhältnisse zwischen epoxid- und aminogruppenhaltigen Verbindungen sind so zu wählen, dass der vollständige Einbau des Amins gewährleistet ist, weil durchbruchartige Oberflächenstörungen beim elektrophoretischen Beschichten auftreten können, d. h. ein geringfügiger Überschuss an Epoxidgruppen ist vorteilhaft.

Es können alle Amine im Gemisch mit den Epoxidgruppen umgesetzt oder es kann stufenweise vorgegangen werden, d. h. ein oder mehrere basische epoxidgruppenhaltige Zwischenprodukte können in verschiedener Reihenfolge hergestellt werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen. Das 1,2-epoxidgruppenhaltige Harz wird vor Zugabe des Amins in organischen Lösungsmitteln wie Xylol, Methylisobutylketon, die später vor dem Verdünnen abdestilliert werden müssen, oder in Lösemitteln wie Ethylenglykolmonoethylether, Propylenglykolmonoethylether, Diethylenglykoldimethylether oder Diacetonalkohol, die in Lösung bleiben können, gelöst. Um überschüssiges Amin zu entfernen, wird gegebenenfalls ein Dünnschichtverdampfer oder eine Wasserdampfdestillation eingesetzt.

Das Amin-epoxidharz der Komponente (A) kann durch Einsatz entsprechender gesättigter oder ungesättigter Verbindungen modifiziert werden, um optimale technische Eigenschaften zu erzielen. Ungesättigte Doppelbindungen werden entweder direkt durch Addition an die Epoxidgruppen oder indirekt durch Umsetzen der Hydroxylgruppen des Grundharzes mit ungesättigten Monoisocyanaten eingeführt, die durch Reaktion von aromatischen und/oder aliphatischen und/oder cycloaliphatischen Di- oder Polyisocyanaten mit α,β-ungesättigten Monocarbonsäuren oder entsprechenden Carbonsäureamiden sowie Hydroxyalkyl(meth)acrylaten oder Dicarbonsäureestern von ungesättigten Alkoholen wie Allylalkohol oder Hydroxyalkyl(meth)acrylaten erhalten werden und wie sie in der DE-A-2 707 482 beschrieben sind. Es werden dabei Verbindungen ausgewählt, die aufgrund ihrer Struktur im Molekülverband thermisch stabile Urethangruppen ergeben. Die direkte Addition an die Epoxidgruppe kann beispielsweise mit Diallylamin, ungesättigten Fettaminen oder auch ungesättigten Fettsäuren erfolgen. Der Einbau ungesättigter Gruppen kann auch über das Kettenverlängerungsmittel erfolgen. So werden ungesättigte Monoepoxide an Di- oder Polyaminen mit mindestens zwei primären Aminogruppen oder mindestens einer primären und einer sekundären Aminogruppe addiert, wie Hexandiamin-1,6, 3-Aminomethylaminopropylamin, Diethylentriamin, Trimethylhexamethylendiamin und Isophorondiamin, entsprechend der Formel

$$H_2N\text{-}(CH_2)_n\text{-}NH_2 + 2\ \overset{O}{\overbrace{CH_2\text{-}CH}}\text{-}R \longrightarrow$$

$$\begin{matrix} HN\text{-}(CH_2)_n\text{-}NH\text{-}CH_2\text{-}CH(OH)\text{-}R \\ | \\ CH_2\text{-}CH(OH)\text{-}R \end{matrix}$$

worin bedeuten: $R = -CH_2\text{-}O\text{-}CH_2\text{-}CH{=}CH_2$, $-CH_2\text{-}O\overset{\displaystyle O}{\overset{\|}{C}}\text{-}R'$, $-CH_2\text{-}NH\overset{\displaystyle O}{\overset{\|}{C}}\text{-}R'$

R' = ungesättigter Kohlenwasserstoffrest von Monocarbonsäuren.

Als ungesättigte Monoepoxidverbindungen können, wie in der DE-A-3 122 641 beschrieben, dabei verwendet werden:

a) Glycidylester von linearen oder verzweigten, isoliert oder konjugiert ungesättigten $C_3$ bis $C_{18}$-Monocarbonsäuren,

b) Glycidylether von linearen oder verzweigten, isoliert oder konjugiert ungesättigten $C_3$ bis $C_{18}$-Monoalkoholen.

Wesentliche Eigenschaftsverbesserungen werden nach der DE-A-3 336 749 gefunden, wenn Amin-Epoxid-Harzmoleküle mindestens ein molekülvergrösserndes Diamin der Formel

$$\begin{matrix} H\text{-}N & \text{———} X \text{———} & N\text{-}H \\ | & & | \\ Y & & Y \end{matrix} \qquad (I)$$

eingebaut enthalten, worin Y für -H oder $C_mH_{2m+1}$ (m = 1 bis 8) oder einen zum Defunktionalisieren verwendeten organischen Rest, der durch Umsetzung der primären Aminogruppe mit Monoepoxiden gebildet wird, und X eine Molekülgruppierung mit mindestens einer Amid-, Harnstoff- und/oder Urethangruppe darstellen, wobei diese Gruppen an die Stickstoffatome der Formel (I) über Alkylengruppen mit 2 bis 16 C-Atomen gebunden sind.

Ein amidgruppenhaltiges Diamin wird durch Kondensation einer Aminocarbonsäure mit einem primären Diamin oder von 1 Mol Dicarbonsäure mit 2 Mol Diamin erhalten. Ein harnstoffgruppenhaltiges Diamin wird durch Addition von Diaminoalkanen an Polyisocyanate mit mindestens zwei Isocyanatgruppen hergestellt. So können 2 Mol

primäres oder sekundäres Diamin oder 1 Mol primäres oder sekundäres Monoamin und 1 Mol primäres Diamin mit 1 Mol Diisocyanat umgesetzt werden.

Für die Erfindung müssen für die unterschiedlich ablaufenden Vernetzungsreaktionen jedoch stets Hydroxylgruppen vorhanden sein. Die im Molekül vorhandene Hydroxylzahl (ausgedrückt in mg KOH pro Gramm Festharz) ist massgebend für die Vernetzungsfähigkeit des Films. Sie sollte über 50, vorzugsweise über 100, besonders vorteilhaft über 150 liegen. Die obere Grenze der Hydroxylzahl liegt bei 400, vorteilhafter unter 300. Ist die Hydroxylzahl zu niedrig, so entstehen bei der Umesterung Filme, die noch in organischen Lösungsmitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozess wichtigen primären und/oder sekundären Hydroxylgruppen können anteilweise durch primäre und/oder sekundäre Aminogruppen ersetzt werden. Das Einführen von primären Aminogruppen in den Harzgrundkörper erfolgt vorzugsweise durch Umsetzen von mindestens einer, bevorzugt mindestens zwei Epoxidgruppen pro Molekül enthaltenden Harzen mit einem amino- und/oder hydroxylgruppenhaltigen Ketimin und/oder Aldimin und/oder Polyamin. Bei den bevorzugten Ketiminen handelt es sich um Umsetzungsprodukte aus Ketonen und sekundäre Aminogruppen enthaltenden Alkylaminen wie Methylisobutylketon und Diethylentriamin.

Die Ketimine werden nach bekannten Methoden durch Wasserabspaltung aus den entsprechenden Polyaminen der allgemeinen Struktur $R\text{-}NH\text{-}R\text{-}NH_2$ oder den entsprechenden Aminoalkoholen der allgemeinen Struktur $HO\text{-}R\text{-}NH_2$ und den geeigneten aliphatischen Ketonen wie Diethylketon, Methylisobutylketon, Ethyl-n-propylketon, oder auch Cyclopentanon, Cyclohexanon, Acetophenon usw. hergestellt. Die Reaktionsbedingungen (Reaktionstemperatur, Auswahl des Lösemittels) müssen so geführt werden, dass keine die Ketiminbindung zersetzende Substanzen wie Wasser in dem Reaktionsprodukt vorhanden bleiben.

Das Ketimin schützt die primäre Aminogruppe so (vgl. US-A-3 523 925), dass sie über eine weitere funktionelle Gruppe, z. B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muss gewährleistet sein, dass kein unumgesetztes niedrigmolekulares Amin im Ansatz zurückbleibt, weil sonst durchbruchartige Oberflächenstörungen beim elektrophoretischen Beschichten auftreten. Die Reaktion der sekundären Aminogruppe des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120 °C zu erhöhen.

Amino-Poly(meth)acrylatharze werden nach dem Stand der Technik hergestellt, wie in DE-A-1 546 854 oder DE-A-2 325 177 beschrieben, z. B. aus Mischungen verschiedener ungesättigter Monomerer, wie (Meth)acrylsäureester, Vinyl(alkyl)-benzole, Hydroxyalkyl(meth)acrylsäureester oder Hydroxyalkyl(meth)acrylamiden, und anderer ungesättigter Monomerer, die entweder basische Stickstoffatome enthalten oder in die durch chemische Umsetzung ein solches basisches Stickstoffatom eingeführt werden kann. Als ungesättigte N-gruppenhaltige Monomere werden z. B. verwendet N-Dialkyl- oder N-Monoalkyl-aminoalkyl-(meth)acrylsäureester, N-Dialkyl- oder N-Monoalkyl-aminoalkyl(meth)acrylamide oder Vinylgruppen enthaltende heterocyclische Verbindungen mit einem oder mehreren basischen Stickstoffatomen.

Nach einem anderen bevorzugten Verfahren werden epoxidgruppenhaltige monoethylenisch ungesättigte Monomere in das Copolymere einpolymerisiert. Danach wird mit überschüssigem primären und/oder sekundären Monoaminen und/oder Monoaminoalkoholen umgesetzt und anschliessend der Aminüberschuss abdestilliert. Dieses Verfahren ist im einzelnen beschrieben in der am 4. Oktober 1984 eingereichten Deutschen Patentanmeldung P 3 436 346.7-44 (DE-A-3 436 346) mit dem Titel «Fremdvernetzendes, epoxidgruppenfreies Amino-Poly(meth)acrylatharz, Verfahren zu seiner Herstellung, dessen Verwendung, es enthaltendes KTL-Bad und dessen Verwendung zum Beschichten von Gegenständen».

Als epoxidgruppenhaltige Monomere können eingesetzt werden Glycidylester der (Meth)acrylsäure, der Malein- und/oder Fumarsäure, Glycidylether von ungesättigten Alkoholen wie Vinyl- und/oder Allylalkohol, Glycidylverbindungen des (Meth)acrylamids, des Malein- und/oder Fumarsäurediamids oder des Maleinimids. Als sekundäre Amine für diese Umsetzung sind besonders zweckmässig sekundäre Amine der Formel

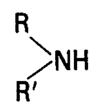

wobei R = -H, $-CH_3$ oder $C_2H_5$,
R' = $-C_nH_{2n+1}$ oder $-C_nH_{2n}OH$
und n = 1 bis 3
bedeutet. Gut lösliche ET-Bäder mit hohem pH-Wert werden erhalten, wenn man Dimethylamin, Diethylamin, Methylethylamin oder N-Methylaminoethanol verwendet.

Die Amino-Poly(meth)acrylatharze enthalten mindestens eine Aminogruppe, bevorzugt tertiäre Aminogruppe pro Molekül und mindestens eine Hydroxylgruppe, bevorzugt mindestens zwei Hydroxylgruppen pro Molekül bei einer mittleren Molmasse ($\bar{M}n$) von 600 bis 10 000.

Amino-Polyurethan- oder -harnstoffharze, die neben Hydroxylgruppen tert. Aminogruppen enthalten, werden z. B. in der DE-A-3 333 834 beschrieben. Sie werden hergestellt aus Polyisocyanaten mit mindestens 2 NCO-Gruppen pro Molekül, die umgesetzt werden mit Polyalkoholen, Polyaminen und/oder Aminopolyalkoholen. Es werden aliphatische, cycloaliphatische und/oder aromatische Polyisocyanate und ihre isocyanatgruppenhaltigen Modifikationen eingesetzt, wie sie hier auch später bei der Herstellung von Vernetzungsmitteln besprochen werden. Die hydroxylgruppenhaltigen Verbindungen werden in einem solchen Überschuss, bezogen auf die NCO-Gruppe, eingesetzt, dass im Endprodukt eine Hydroxylzahl von 50 bis 400 vorhanden ist. Sie dienen dabei einmal der Einführung von vernetzungsfähigen Gruppen und zum anderen der Molekülvergrösserung. Beispiele hierfür sind Neopentylglykol, Trimethylolpropan, Glycerin, Pentaerythrit oder höhermolekulare Polyole wie Polyether, Polyester und/oder Polycaprolactonpolyole. Für die Molekülvergrösserung können auch primäre und/oder sekundäre N,N'-Diaminoalkane oder primäre N-Aminoalkanole oder N-Alkylaminoalkanole verwendet werden wie Hexandiamin-1,6, Ethanolamin oder N-Methyl-ethanolamin. Um die Aminogruppen einzuführen, verwendet man tert. Aminogruppen, die entweder über zusätzlich vorhandene Zerewitinoffreaktive Aminogruppen oder über Hydroxylgruppen mit den Isocyanatgruppen umgesetzt werden. Beispiele hierfür sind N,N-Dimethylaminoethanol, N-Methyldiethanolamin, Triethanolamin, N,N-Diethylaminoethylamin oder N,N-Dimethylaminopropylamin. Amino-Polyurethan- oder -harnstoffharze enthalten mindestens eine Aminogruppe, bevorzugt tertiäre Aminogruppe und mindestens zwei Hydroxylgruppen, pro Molekül bei einer mittleren Molmasse ($\overline{M}n$) von etwa 500 bis 20 000, speziell 1000 bis 5000. Die Einzelkomponenten können im Gemisch mit dem Polyisocyanat umgesetzt oder auch in beliebiger Reihenfolge stufenweise über ein oder mehrere Zwischenprodukte, die noch Isocyanatgruppen enthalten, hergestellt werden. Ein Zwischenprodukt, das tert. Aminogruppen und NCO-Gruppen enthält, wird bevorzugt in einer zweiten Reaktionsstufe mit einem solchen Überschuss an Polyhydroxylverbindungen umgesetzt, dass alle NCO-Gruppen reagieren und dabei die gewünschte Hydroxylzahl erhalten wird.

Die vorstehend beschriebenen fremdvernetzenden, aminogruppenhaltigen Kunstharz-Bindemittel (A) werden zusammen mit Vernetzungsmittelgemischen eingesetzt, die nachfolgend als Komponente (B) bezeichnet werden. Gemäss dem Stand der Technik werden dabei auf 50 bis 95 Gew.-% Kunstharz-Bindemittel (A) 50 bis 5 Gew.-% Vernetzungsmittel bezogen auf Festharz eingesetzt. Das bevorzugte Mischungsverhältnis der Komponenten (A) und (B) liegt zwischen 90 zu 10 und 60 zu 40 und wird empirisch aus den optimal erreichbaren anwendungstechnischen Eigenschaften bei der gegebenen Einbrenntemperatur bestimmt. Überraschenderweise werden durch Verwendung von Mischungen aus blockierten Polyisocyanaten und Harzen mit umesterungsfähigen Estergruppen im Mischungsverhältnis 1:20 bis 20:1 spezielle Eigenschaftseffekte erhalten, die aus den Einzelkomponenten nicht zu erwarten waren. Zweckmässig wird, bezogen auf die Summe der Vernetzungsmittel als Festharz eine Mischung von 5 bis 95 Gew.-% blockiertes Polyisocyanat mit 95 bis 5 Gew.-% umesterungsfähiges Vernetzungsmittel verwendet. Besonders vorteilhaft ist ein Mischungsverhältnis von blokkiertem Polyisocyanat zu umesterungsfähigem Vernetzungsmittel von 1:4 bis 4:1, ganz besonders vorteilhaft von 1:2 bis 2:1. Das Vernetzungsmittel hat zweckmässig eine mittlere Molmasse ($\overline{M}n$) von etwa 250 bis 5000, speziell 500 bis 3000.

Die blockierten Polyisocyanate werden dadurch hergestellt, dass man ein multifunktionelles Isocyanat mindestens mit einer stöchiometrischen Menge einer monofunktionellen, aktiven Wasserstoff (Zerewitinoff-Reaktion) enthaltenden Verbindung umsetzt, wobei gegebenenfalls basische Katalysatoren wie tert. Amine oder Metallsalze Dibutylzinndilaurat oder Zinnoctoat zugegeben werden können. Das erhaltene Reaktionsprodukt setzt sich beim Erwärmen mit den Hydroxylgruppen des Kunstharz-Bindemittels (A) um, wobei die Schutzgruppe wieder abgespalten wird. Als Schutzgruppen sind solche geeignet, die bei Einbrenntemperaturen von weniger als 210 °C, vorzugsweise weniger als 190 °C, besonders weniger als 180 °C, andererseits über 110 °C, vorzugsweise über 140 °C, besonders über 150 °C abspalten. Mittel, die die Isocyanate blockieren, enthalten nur eine einzige Amin-, Amid-, Lactam-, Thiol- oder Hydroxylgruppe. So haben sich z. B. bewährt aliphatische oder cycloaliphatische Alkohole wie 2-Ethylhexanol, Dialkylaminoalkohole wie Dimethylaminoethanol, Phenole wie Kresol, Oxime wie Methylethylketoxim, Lactame wie ε-Caprolactam, Imide wie Phthalimid, Malonsäure oder Acetessigester.

Als typische, multifunktionelle Isocyanate eignen sich aliphatische, cycloaliphatische und/oder aromatische Polyisocyanate mit mindestens zwei Isocyanatgruppen pro Molekül. Beispiele hierfür sind die Isomeren oder Isomerengemische des Toluylendiisocyanat, Toluylentriisocyanat, 4,4'-Diphenylmethan-diisocyanat, Diphenyltetraisocyanat und/oder Naphthyltetraisocyanat, sowie ihre Hydrierungsprodukte wie Dicyclohexylmethandiisocyanat. Bevorzugte aliphatische Diisocyanate sind Verbindungen der Formel

$$O{=}C{=}N-\left(-CR_2-\right)_r-N{=}C{=}O$$

worin r eine ganze Zahl von 3 bis 12, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Hexamethylendiisocyanat, 1,6-Diisocyanato-2,2,4-trimethylhexan, Isophorondiisocyanat.

Gemischt aliphatisch/aromatische Verbindungen sind auch geeignet. Als Triisocyanate haben

sich die Produkte bewährt, die durch Trimerisation oder Oligomerisation aus Diisocyanaten oder Polisocyanaten und polyfunktionelle OH- oder NH-Gruppen enthaltende Verbindungen dargestellt werden. Hierzu gehört z. B. das Biuret aus dem Hexamethylendiisocyanat und Wasser, das Isocyanurat des Hexamethylendiisocyanats oder das Addukt von Toluylendiisocyanat an Trimethylolpropan. Eine Molekülvergrösserung kann auch durch Reaktion mit tert. Aminogruppen enthaltenden Polyalkoholen wie N-Methyl-diethanolamin, Triethanolamin oder tertiäre Aminogruppen enthaltenden Polyaminen wie 3-(Methyl)-3-(2-Aminoethyl)-aminopropylamin erfolgen. Um die Löslichkeit zu verbessern, können ausserdem kettenabbrechende N-Dialkyl-aminoalkohole wie Dimethyl-aminoethanol oder N,N-Dialkyl-alkylendiamine wie Dimethylaminopropylamin oder N,N-Diethyl-N'-Methyl-1,3-ethandiamin eingesetzt werden. Isocanathaltige Präpolymere auf Basis von Polyglykolethern, Polyesterpolyolen, Polyetherpolyolen, Polycaprolactonpolyolen und/oder Polycaprolactampolyolen können ebenfalls mit Vorteil eingesetzt werden. Vinylpolymerisate die neben Isocyanatgruppen aus z. B. Cyanatoethyl(meth)-acrylat als Comonomere noch Alkyl(meth)acrylate und/oder (Alkyl)-vinylbenzole enthalten, können auch verwendet werden. Um wenig vergilbende Lacke herstellen zu können, werden aliphatische und cycloaliphatische Polyisocyanate bevorzugt.

Harze mit umesterungsfähigen Estergruppen enthalten endständige oder seitenständige, veresterte Carboxylgruppen, die im neutralen, wässrigen Medium weitgehend stabil sind, jedoch im basischen Medium des abgeschiedenen Films bei Temperaturen über etwa 140 °C mit einem oder mehreren hydroxyl- und aminogruppenhaltigen Kunstharz-Bindemittel (Komponente A) reagieren. Hierbei estern bzw. amidieren die umesterungsfähigen Estergruppen mit den Hydroxylgruppen oder den reaktiven NH-Gruppen des Kunstharz-Bindemittels (A) unter Abspalten der leichter flüchtigen «alkoholischen Schutzgruppen» um. Es sollen im wesentlichen alle endständigen oder seitenständigen Carboxylgruppen mit Alkoholen verestert sein, die unter den Einbrennbedingungen flüchtig sind. Um ein Wandern des Polyesters zur Anode zu vermeiden, ist daruf zu achten, dass er eine Säurezahl unter 20, bevorzugt unter 10, besonders bevorzugt unter 3 hat.

Die Reaktivität der Ester wird durch geeigneten chemischen Aufbau gesteigert, z. B. durch Erhöhen der elektrophilen Aktivität der Carboxylgruppe oder durch einen negativen induktiven Effekt auf die Alkoholgruppe. Zur Umesterung befähigt sind primäre, sekundäre und tertiäre Carboxylgruppen. Aufgrund ihrer höheren Reaktivität werden primäre Carboxylgruppen bevorzugt.

Die Umesterung wird unterstützt durch die Flüchtigkeit von niederen linearen oder verzweigten primären Monoalkoholen oder durch 1,2-Glykole, die gegebenenfalls durch Ether- oder Estergruppen substituiert sind. Je niedrigermolekular die Alkohole sind, die bei der Umesterung abgespalten werden, desto niedriger sind die Spaltverluste. Methanol oder Ethanol werden besonders bevorzugt. In der Literatur werden eine Reihe estergruppenhaltige Vernetzungsmittel beschrieben, die zur Umesterung mit OH-Gruppen und/oder Umamidierung mit $NH_2$-Gruppen eingesetzt werden, z. B.: in der EP-A-0 004 090 werden Polyurethanester beschrieben, die als umesterungsfähige Gruppen Hydroxyalkylestergruppen, wie Milchsäureester, oder Aminoalkylestergruppen enthalten. Das Vernetzungsmittel weist etwa folgende allgemeine Struktur auf

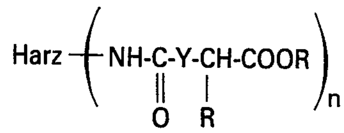

wobei n mindestens 2 ist, bevorzugt ein Wert von 3 bis 10, Y entweder -O- oder -NH- bedeutet und R einen geradkettigen oder verzweigten Alkylrest mit 1 bis 8, bevorzugt 1 oder 2 C-Atomen darstellt.

Ein anderes Vernetzungsmittel kann ein carboxylgruppenhaltiger Polyester sein, dessen Carboxylgruppen durch gegebenenfalls substituierte 1,2-Glykole unter Bildung von β-Hydroxy-verbindungen blockiert sind:

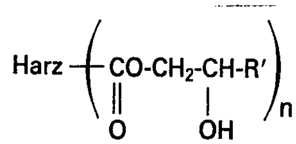

Die eingesetzten 1,2-Glykole sind zweckmässig durch gesättigte oder ungesättigte Alkyl-, Ether-, Ester- oder Amidgruppen substituiert, d. h. R' steht für -H, -R, $-CH_2OH$, $-CH_2-O-R$, $-CH_2-O\overset{\overset{O}{\|}}{C}-R$, $-CH_2NH\overset{\overset{O}{\|}}{C}-R$, wobei n mindestens 2, bevorzugt einen Wert von 3 bis 10 bedeutet. R ist eine lineare oder verzweigte Alkylgruppe mit 1 bis 15 C-Atomen. Solche Vernetzungsmittel sind in der EP-A-012 463 und DE-A-3 103 642 beschrieben, z. B. als Reaktionsprodukt von Trimellithsäureanhydrid mit Cardura E®, dem Glycidylester der Versaticsäure®.

Andere Vernetzungsmittel werden durch Umesterung von Dicarbonsäurealkylestern mit Polyalkoholen hergestellt. Als besonders reaktiv haben sich Harze folgender allgemeiner Formel erwiesen:

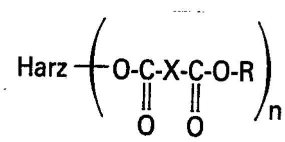

wobei n mindestens 2 ist, bevòrzugt einen Wert von 3 bis 1, X eine $-CH_2-$, $-CH_2-CH_2-$ oder $-CH{=}CH-$ Gruppe und R einen geradkettigen oder verzweigten Alkylrest mit 1 bis 8, bevorzugt 1 oder 2 C-Atomen darstellt. Im einfachsten Fall ist dieses Vernetzungsmittel ein Reaktionsprodukt aus Trimethylolpropan und Malonsäuredimethylester, wie es in der EP-A-082 291 beschrieben ist.

Andere zur Umesterung befähigte Vernetzungsmittel werden durch Michael-Addition von Acetessigsäurealkylester oder Malonsäuredialkylester an Harzen mit Doppelbindungen, die über CO-Gruppen aktiviert werden, erhalten:

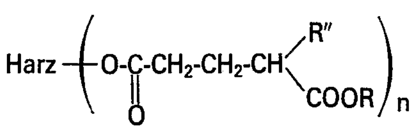

wobei R″ für -COOR, -CO-R oder -CN steht und n mindestens 2, bevorzugt ein Wert von 3 bis 10 ist. Diese Harze werden im einfachsten Fall aus Butandioldiacrylat und Acetessigester oder aus dem Toluylendiisocyanat-hydroxyalkyl(meth)acrylat-Addukt und Malonsäuredialkylester, wie in der DE-A-3 315 469 beschrieben, hergestellt. Die Michael-Addition kann stöchiometrisch durchgeführt werden oder auch unter Einsatz von überschüssigen Doppelbindungen.

In der DE-A-3 322 766 werden Vernetzungsmittel beschrieben, die Carbalkoxymethylestergruppen enthalten. Vernetzungsmittel dieser Art weisen etwa folgende allgemeine Formel auf

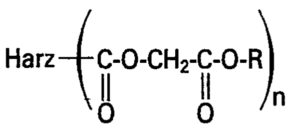

wobei n mindestens 2 und R ein Alkylrest sind.

Die Vernetzung der Komponenten (A) und (B) kann gegebenenfalls durch Zusatz von stark basischen tertiären Aminen und/oder aktiven Metallverbindungen beschleunigt werden. Eine besondere, manchmal synergistische Wirkung wird erreicht durch die Kombination von basischem Medium des abgeschiedenen Amino-Basisharzes und den Metallkatalysatoren.

Zur Katalyse des Umesterungsverfahrens ist im allgemeinen ein höherer Katalysatorgehalt notwendig als für die Umsetzung der Komponente (A) mit den blockierten Polyisocyanaten. Insgesamt liegt der Gehalt an solchen Katalysatoren im Bereich von etwa 0,01 bis 10 Gew.-%, bezogen auf das Gesamtgewicht der Komponenten (A) und (B). Das genaue Mengenverhältnis kann der Fachmann unter Berücksichtigung des Stands der Technik leicht ermitteln. Für die Umsetzung mit Polyisocyanaten sind Mengenverhältnisse im unteren Bereich, für das Umesterungsverfahren im oberen Bereich zweckmässig. Als Katalysatoren werden zweckmässig Metalloxide, Metallsalze oder Metallkomplexe von ein- oder mehrwertigen Metallen eingesetzt. Sie werden im allgemeinen nach Salzbildung mit z. B. 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien, 8-Oxy-hydrochinolin, 4-Methylcatechin und/oder 2,5-Dimercapto-1,3,4-thiodiazol.

Beispiele für geeignete Katalysatoren sind Antimontrioxid, Tri-n-butyl-zinnoxid, Dibutylzinn-dilaurat, Bleioctoat, Eisen-III-acetylacetonat oder das Reaktionsprodukt aus Zinkoxid und 8-Oxyhydrochinolin. Für die Reaktion der blockierten Polyisocyanate wird 0,01 bis 2 Gew.-% Dibutylzinndilaurat, für die Umesterung 2 bis 8 Gew.-% Bleioctoat bevorzugt. Die Metallkatalysatoren können auch in fein verteilter Form als Pigmente wie Bleisilikat eindispergiert werden. Wasserverdünnbare Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmässig verteilen.

Die Komponenten (A) und (B) können kalt gemischt oder auch bei erhöhter Temperatur präkondensiert werden. Dabei reagieren die Komponenten (A) und (B) in gewissem Umfang miteinander, ohne dass das Gemisch seine Hitzehärtbarkeit und die Eigenschaft, durch Protonisieren mit Säuren wasserlöslich gemacht werden zu können, verliert.

Zum Ausbalancieren der anwendungstechnischen Eigenschaften ist es zweckmässig, dass das kathodisch abscheidbare Kunstharz-Bindemittel (A) ausser dem Vernetzungsmittel noch zusätzlich bis zu 30 Gew.-%, bevorzugt 5 bis 20 Gew.-% eines hydroxyfunktionellen Harzes (Komponente C) enthält, das mit den blockierten Polyisocyanaten und den umesterungsfähigen Vernetzungsmitteln reagiert. So können zum Steigern des Umgriffs hydroxyfunktionelle Harze mit einer OH-Zahl von 30 bis 500, speziell 50 bis 300 und einer mittleren Molmasse ($\bar{M}n$) von 300 bis 5000, speziell 500 bis 3000 eingesetzt werden. Beispiele für solche Harze sind Styrol-Allylalkohol-Copolymere, OH-gruppenhaltige (Meth)acrylcopolymere, Caprolactonpolyole, Caprolactampolyole, Urethanpolyole, OH-gruppenhaltige Polyether und Polyester. So werden OH-gruppenhaltige Copolymere durch Copolymerisation von ungesättigten, hydroxylgruppenhaltigen Monomeren mit anderen ethylenisch ungesättigten Monomeren, die keine weiteren reaktiven funktionellen Gruppen enthalten, wie schon oben beschrieben, hergestellt. Als Polyetherpolyole werden Verbindungen der allgemeinen Formel

$$H \left[ O(CHR)_o \right]_p OH$$

verstanden, in der R = H oder ein niedrigerer, gegebenenfalls mit verschiedenen Substituenten versehener Alkylrest, o = 2 bis 6 und p = 5 bis 50 ist. Beispiele sind Polyoxytetramethylenglykole.

Polyesterpolyole kann man durch Polykondensation von Polycarbonsäuren oder ihren Anhydriden mit organischen Polyalkoholen oder durch Umsetzung eines ε-Lactons mit Polyalkoholen erhalten. Üblicherweise sind die Polycarbonsäuren aliphatische, cycloaliphatische oder aromatische Dicarbonsäuren und die Polyalkohole lineare oder verzweigte aliphatische oder cycloaliphatische Polyole. Beispiele sind verzweigte Polyester aus Adipinsäure, Phthalsäureanhydrid, Trimethylolpropan und Butylenglykol-1,4 oder das Reaktionsprodukt von ε-Caprolacton mit Trimethylolpropan. Polyurethanpolyole werden durch Umsetzen von aliphatischen, cycloaliphatischen oder aromatischen Polyisocyanaten, bevorzugt Diisocyanaten, mit aliphatischen oder cycloaliphatischen Polalkoholen, Poletherpolyolen und/oder Polyesterpolyolen erhalten. Die verschiedenen hydroxyfunktionellen Harze können auch als Gemische verwendet werden oder segmentartig aufgebaut sein. Beispiele hierfür sind die Reaktionsprodukte von 2 Mol Polyglykolether mit 1 Mol hydroxylgruppenhaltigem Polyester oder 2 Mol Polyglykolether mit 2 Mol Dicarbonsäure und 1 Mol hydroxylgruppenhaltigem Polyurethan.

Die Harze enthalten eine solche Menge an polaren Gruppen, bevorzugt primären OH-Gruppen, dass sie einwandfrei in dem neutralisierten, basischen Kunstharz-Bindemittel (Komponente A) einemulgiert sind. Zum Erreichen einer besseren Verträglichkeit und Wasserverdünnbarkeit ist der Einbau einer geringen Aminzahl unter 30, besonders unter 20, möglich. Die Harze werden bevorzugt so aufgebaut, dass die Komponenten beim Einbrennen möglichst wenig vergilben. Der Molekulargewichtsbereich wird so ausgewählt, dass sie nicht mehr flüchtig sind, jedoch durch eine verbesserte Fliessfähigkeit eine gute Filmbildung erzielen. Eine eventuell erfolgende Präkondensation kann in beliebiger Reihenfolge erfolgen, also entweder Komponenten (A) mit (B) oder (B) mit (C) oder (A) mit (B) und (C).

An Stelle des Vernetzungsmittel-Gemisches aus (A) und (B) können auch Vernetzungsmittel verwendet werden, die blockierte Polyisocyanatgruppen und umesterungsfähige Estergruppen gemeinsam enthalten, wobei das Zahlenverhältnis der blockierten Isocyanatgruppen zu den umesterungsfähigen Estergruppen im Bereich 1:20 bis 20:1, vorzugsweise 1:4 bis 4:1, besonders bevorzugt 1:2 bis 2:1 liegt. Man kann sie dadurch herstellen, dass man Polyisocyanate teilweise blokkiert und die verbleibenden Isocyanatgruppen mit Verbindungen umsetzt, die mit Isocyanatgruppen reaktionsfähige Gruppen und umesterungsfähige Estergruppen enthalten. Man kann auch Verbindungen, die umesterungsfähige Estergruppen sowie mit Isocyanaten reagierende Gruppen enthalten, mit Polyisocyanaten im Überschuss umsetzen und die noch verbleibenden freien Isocyanatgruppen dann blockieren. Durch Protonisieren mit Säuren wird das kationische Kunstharz-Bindemittel (A) in an sich bekannter Weise wasserverdünnbar gemacht. Beispiele für Säuren sind Ameisensäure, Essigsäure, Propionsäure, Milchsäure, Zitronensäure, Malonsäure, Acrylsäure, Phosphorsäure oder Alkylphosphorsäure. Monobasische niedrigmolekulare organische Carbonsäuren werden bevorzugt. Es muss mindestens so viel Säure zugegeben werden, dass eine stabile Emulgierung des kationischen Basisharzes erfolgt. Ein Überschuss an Säure, d. h. ein Neutralisationsgrad über 100%, ist zweckmässig zu vermeiden. Der MEQ-Wert (Milliäquivalente Säure pro 100 g Festharz) liegt im allgemeinen zwischen 20 und 80. Es wird ein möglichst niedriger MEQ-Wert angestrebt, um ein möglichst hohes Abscheideäquivalent zu erhalten.

Das Überzugsmittel kann zum Senken der Viskosität, zum Steuern der Abscheidespannung und zum Verbessern der Haftung und des Verlaufs bis zu ungefähr 20 Gew.-% organische Lösemittel enthalten. Es wird ein möglichst niedriger Gehalt an organischen Lösemitteln angestrebt, besonders unter 15 Gew.-%, ganz besonders unter 10 Gew.-%.

Als Lösemittel dienen Alkohole, Glykolether, Ketoalkohole, gegebenenfalls unter Zusatz von aliphatischen und/oder aromatischen Kohlenwasserstoffen verschiedener Kettenlänge. Bei der Auswahl muss berücksichtigt werden, dass das Vernetzungsmittel nicht wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäss der Erfindung beträgt nach Verdünnen mit Wasser zweckmässig 5 bis 50 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmässige Temperatur aufrechtzuerhalten und ein Absetzen der unlöslichen Bestandteile der Dispersion, z. B. der Pigmente zu verhindern. Der pH-Wert des Lackes liegt im allgemeinen zwischen 4,0 und 7,5, vorzugsweise zwischen 5,0 und 6,5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmässig

frühestens 24 h nach Herstellen des Bades. Während dieser Zeit wird zweckmässig kontinuierlich gerührt, um eine gleichmässige Verteilung zu erhalten. Als Anode werden elektrisch leitfähige, nicht korrodierende Elektroden, z. B. aus nichtrostendem Stahl oder Graphit verwendet. Der an der Kathode zu beschichtende Gegenstand und die Anode werden, wie für die elektrophoretische Abscheidung bekannt, in ein wässriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmässig etwa 15 bis 35 °C gehalten. Festkörper, Abscheidungstemperatur und -zeit, sowie Spannung werden so gewählt, dass die gewünschte Schichtstärke nach Abspülen mit Wasser und/oder Ultrafiltrat und Einbrennen der Temperaturen von etwa 150 bis 230 °C erhalten wird. So steigt z. B. die Schichtstärke mit zunehmender Beschichtungszeit und Abscheidespannung. Beim Anlegen eines elektrischen Stromes mit einer Spannung von zweckmässig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z. B. Elektrodialyseverfahren oder Ultrafiltration erfolgen.

Das konzentrierte, mit Wasser zu verdünnende Bindemittel gemäss der Erfindung mit einem Festkörper von etwa 85 bis 60 Gew.-% kann in üblicher Weise mit Kugelmühle, Dreiwalze oder Perlmühle pigmentiert werden. Hierzu können übliche Pigmente, Füllstoffe, Korrosionsschutzinhibitoren und Lackhilfsmittel wie Antikratermittel, Verlaufsmittel oder Antischaummittel verwendet werden. Naturgemäss sind solche Zusatzstoffe auszuwählen, die mit Wasser im sauren bis neutralen Medium keine störenden Reaktionen eingehen, keine wasserlöslichen Fremdionen einschleppen und beim Altern nicht so ausfallen, dass sie nicht wieder aufgerührt werden können. Die Lacke sind besonders für die Elektrotauchlackierung von Metallen geeignet und geben nach Einbrennen von bevorzugt 15 bis 45 min bei 160 bis 190 °C glatte glänzende Filme mit guter Alterungsstabilität, gleichmässiger Schichtdicke, verbesserter Haftfestigkeit, höherer Härte und Elastizität, sowie sehr guter Korrosionsbeständigkeit. Das Pigment-Bindemittelverhältnis ist abhängig von Dispergierfähigkeit und Viskosität des Bindemittels und liegt im allgemeinen zwischen 0,1 zu 1 und 1,5 zu 1. Wie die Vergleichsversuche zeigen, geben die erfindungsgemässen Bindemittel beim Einbrennen überraschenderweise weniger Spaltprodukte ab und vergilben geringer als die Kombination mit den reinen, nichtgemischten Vernetzungsmitteln. Es können auf diese Weise Amino-Epoxidharz-Kombinationen entwickelt werden, die aufgrund der beim Einbrennen erhaltenen geringeren Farbtonveränderung besser für Zweischichtlackierungen geeignet sind.

Kunstharz-Bindemittel A1

Zu einer Lösung von 283,2 g Polyglycidylether auf Basis Bisphenol A mit einem Epoxid-Äquivalentgewicht von 472 (Epikote 1001®), in 161 g Ethylenglykol-monobutylether werden 21 g Diethanolamin, 10,2 g 3-(N,N-Dimethylamino)propylamin und 61,6 g eines Adduktes von 116 g 1,6-Diaminohexan mit 500 g Cardura E 10®, einem Glycidylester der Versaticsäure®, zugegeben. Die Mischung von Polyether und den Aminen reagiert 4 h lang unter Rühren bei Temperaturen von 85 bis 90 °C. Zum Vervollständigen der Reaktion wird dann noch 1 h auf 120 °C geheizt. Der Epoxidgehalt ist dann Null.

Aminzahl: 98 mg KOH/g Festharz;
Festkörpergehalt: etwa 70 Gew.-%.

Kunstharz-Bindemittel A2

725 g Ethylenglykol-monobutylether werden unter Inertgas auf 110 °C unter Einschalten eines Rückflusskühlers erwärmt. Innerhalb von 3 h wird eine Mischung aus

192 g Hydroxyethylacrylat,
137 g Butandiol-monoacrylat,
228 g Glycidylmethacrylat,
364 g 2-Ethyl-hexylacrylat,
439 g Butylmethacrylat,
438 g Methylmethacrylat,
90 g Styrol und
44 g Azo-bis-isobutyronitril

zugegeben. Danach wird eine Stunde bei 110 °C gehalten, dann 6 g Azo-bis-isobutyronitril zugegeben und dieser Vorgang nach einer weiteren Stunde wiederholt. Nach 3 h 110 °C werden folgende Kennwerte gemessen:

Festkörpergehalt: 72,2 Gew.-% (nach 30 min Erwärmen auf 150 °C)
Viskosität: 2,14 Pas (nach Verdünnen auf 60 Gew.-% mit Ethylenglykol-monobutylether bei 25 °C)

Nach Abkühlen auf 50 °C werden ein Gemisch von

129 g Diethylamin und
201 g Isopropanol

schnell zugegeben (1,10 Mol Amin auf 1,00 Äquivalent Epoxid). Nach 30 min wird auf 65 °C erwärmt, dann 1 h gehalten, anschliessend auf 105 °C aufgeheizt und dann 2 h bei dieser Temperatur gehalten. Nach Abkühlen auf 80 °C wird unter Vakuum Isopropanol und Aminüberschuss abdestilliert und dann die Aminreste durch Wasserdampfdestillation entfernt. Einstellen des Festkörpergehaltes mit Ethylenglykol-monobutylether auf 78 Gew.-%.

Endwerte:
Festkörpergehalt: 78,7 Gew.-% (30 min 150 °C)
Aminzahl: 45 mg KOH/g Festharz
Viskosität: 3,44 Pas (nach Verdünnen auf 60 Gew.-% mit Ethylenglykol-monobutylether bei 25 °C)

Vernetzungsmittel B1

1248 g Cardura E® werden auf 100 °C unter Inertgas erwärmt und dann unter gutem Rühren in mehreren Portionen 460,8 g Trimellithsäureanhydrid zugegeben. Unter Ausnutzen der exothermen Reaktion wird bis auf 195 °C geheizt. Wenn das Harz klar ist, wird auf 145 °C abgekühlt und 1,8 ml Benzyldimethylamin als Katalysator zugegeben. Nach Erreichen einer Säurezahl von 2 mg KOH/g Festharz wird auf 100 °C abgekühlt und mit 712 g Ethylenglykol-monobutylether verdünnt.

Festkörpergehalt: etwa 70 Gew.-% (nach 40 min Erwärmen auf 180 °C).

Vernetzungsmittel B2

666 g Isophorondiisocyanat und 134 g Trimethylolpropan werden mit 431 g wasserfreiem Ethylenglykolacetat gemischt und unter Rühren und Ausschluss von Luftfeuchtigkeit innerhalb 1 h auf 60 °C erwärmt. Das zunächst feste Trimethylolpropan schmilzt hierbei und reagiert dann langsam innerhalb einer weiteren Stunde, wobei die Temperatur auf 90 °C erhöht wird. Zum Vervollständigen der Reaktion hält man noch weitere 3 h bei 90 °C, wonach ein NCO-Äquivalentgewicht von 410 erhalten wird. Dann werden 366 g ε-Caprolactam in 3 h so langsam zugegeben, dass die Reaktionstemperatur von 100 °C nicht überschritten wird. Man hält diese Temperatur bis die NCO-Zahl unter 0,1% abgesunken ist. Das Lösemittel wird unter Vakuum weitgehend abdestilliert und es wird mit Ethylenglykol-monobutylether auf 80 Gew.-% verdünnt.

Vernetzungsmittel B3

875 g Desmodur L®, ein Umsetzungsprodukt von 1 Mol Trimethylolpropan mit 3 Mol Toluylendiisocyanat das 75%ig in Ethylacetat gelöst ist, wird auf 90 °C unter Ausschluss von Feuchtigkeit und Überleiten von trockenem Inertgas unter gutem Rühren auf 90 °C erwärmt. Es werden 342 g ε-Caprolactam in 3 h so langsam zugegeben, dass eine Reaktionstemperatur von 100 °C nicht überschritten wird. Man hält diese Temperatur, bis die NCO-Zahl unter 0,1% abgesunken ist. Das Lösemittel wird über Vakuum weitgehend abdestilliert, und es wird mit Ethylenglykol-monobutylether auf 80 Gew.-% verdünnt.

Beispiel 1

In einer Perlmühle werden 201 g Kunstharz-Bindemittel A1, 123 g Titandioxid-Pigment vom Rutil-Typ und je nach Vernetzer-Typ 0,2% Dibutyl-zinndilaurat (für blockierte Isocyanate) bzw. 2% Bleioctoat (für Polyester) oder deren Mischungen bei einer Temperatur unter 55 °C 35 min lang angerieben. Danach werden die Vernetzerharze in den in der nachfolgenden Tabelle angegebenen Abmischungen zugegeben und im Dissolver mit 12 g Ameisensäure (50%ig) vermischt. Anschliessend wird unter Rühren mit vollentsalztem Wasser auf 2 l verdünnt.

Tabelle 1

| Versuche | Kunstharz-Bindemittel | Vernetzungsmittel block. Isocyanat | Polyester |
|---|---|---|---|
| 1 | 201 g A1 | 44 g B3 | – |
| 2 | 201 g A1 | 33 g B3 | 12,6 g B1 |
| 3 | 201 g A1 | 11 g B2 | 25,2 g B1 |
| 4 | 201 g A1 | – | 50,4 g B1 |

Die Versuche 1 und 4 sind also Versuche gemäss dem Stand der Technik, da im Versuch 1 nur ein blockiertes Polyisocyanat als Vernetzer und im Versuch 4 nur ein Polyester als Vernetzer eingesetzt werden. Die Versuche 2 und 3 sind Beispiele gemäss der Erfindung.

Die elektrophoretischen Abscheidungen erfolgen auf zinkphosphatierten Blechen bei einer Badtemperatur von 28 °C. Es wird 2 min lang beschichtet und die Spannung so gewählt, dass eine Schichtdicke von 17 bis 18 µm entsteht. Die Einbrenntemperatur beträgt 25 min bei 180 °C. Die Versuchsergebnisse sind in Tabelle 2 und 3 zusammengefasst. In den Tabellen sind jeweils nur für das blockierte Isocyanat und den Polyester die eingesetzten Gewichtsteile angegeben. Diese werden jeweils im Gemisch mit 80 Gewichtsteilen Kunstharz-Bindemittel A1 eingesetzt.

Beispiel 2

In einer Perlmühle werden 206,5 g Kunstharz-Bindemittel A2, 106,5 g eines Rutil-Pigmentes, 6,4 g Octa-Soligen Blei (72%ig)®, 0,4 g Dibutylzinn-dilaurat und 54,8 g Ethylenglykol-monobutylether bei Temperaturen unter 55 °C 35 min lang angerieben. Danach werden 24,2 g Vernetzungsmittel B1 und 29,8 g Vernetzungsmittel B2 zugegeben und unter dem Dissolver vermischt, wobei nach und nach 10,5 g Ameisensäure (50%ig) zugegeben werden. Unter gutem Rühren auf 2 l mit vollentsalztem Wasser vorsichtig verdünnen.

Badwerte:
Festkörpergehalt: 14,2 Gew.-% (25 min 180 °C)
pH-Wert: 5,2
MEQ-Wert: 51
Badleitfähigkeit: 1730 $\mu Scm^{-1}$

Auf zinkphosphatierten Stahlblechen (Bonder 132) wird bei einer Badtemperatur von 28 °C 2 min mit 150 Volt beschichtet. Nach dem Abspülen mit Wasser und 25 min langem Einbrennen bei 180 °C ergibt sich eine Trockenfilmstärke von 17 µm. Es entsteht ein glatter, weisser Film mit einwandfreier Oberfläche, der beim Überbrennen (30 min 200 °C) nicht vergilbt. Nach wochenlangem Stehen des Bades kann ohne Schwierigkeiten ein Film mit der gleichen Oberflächenqualität hergestellt werden.

Tabelle 2

| | Versuch 1 | Versuch 2 |
|---|---|---|
| blockiertes Isocyanat B3 | 20 Gew.-Teile | 15 Gew.-Teile |
| Polyester B1 | 0 Gew.Teile | 5 Gew.-Teile |
| Badwerte: | | |
| pH-Wert | 5,0 | 5,02 |
| Badleitfähigkeit ($\mu Scm^{-1}$) | 1670 | 1700 |
| MEQ-Werte | 53,8 | 53,6 |
| Festkörper (30'180 °C) | 12,5 | 12,9 |
| Filmeigenschaften: | | |
| Einbrennverlust (30'190 °C) | 12,3 Gew.-% | 11,3 Gew.-% |
| Farbtonverschiebung (ΔE) | 19,4 | 10,3 |
| Vernetzung (MIBK-Rubtest) | i.O. | i.O. |
| Pendelhärte nach König (DIN 53157) | 176" | 182" |
| Erichsen-Tiefung (mm) (DIN 53156) | 4,9 mm | 5,5 mm |
| Gitterschnitt (DIN 53151) | 0–1 | 0 |
| Glanz (nach Gardner 60°) | 80 | 83 |
| Blauverschiebung bei Bauknecht-Wechseltest | 2–3 | 1–2 |

Tabelle 3

| | Versuch 3 | Versuch 4 |
|---|---|---|
| blockiertes Isocyanat B2 | 5 Gew.-Teile | 0 Gew.-Teile |
| Polyester B1 | 15 Gew.-Teile | 20 Gew.-Teile |
| Badwerte: | | |
| pH-Wert | 5,3 | 5,0 |
| Badleitfähigkeit ($\mu Scm^{-1}$) | 1710 | 1620 |
| MEQ-Wert | 52,2 | 56,0 |
| Festkörper | 13,3 Gew.-% | 11,6 Gew.-% |
| Filmeigenschaften: | | |
| Einbrennverlust (25'180 °C) | 8,8 Gew.-% | 10 Gew.-% |
| Farbtonverschiebung (ΔE) | 10,2 | 14 |
| Vernetzung (MIBK-Rubtest) | i.O. | i.O. |
| Pendelhärte nach König (DIN 53157) | 162" | 158" |
| Erichsen-Tiefung (mm) (DIN 53156) | 6,3 mm | 5,1 mm |
| Gitterschnitt (DIN 53151) | 0–1 | 1 |
| Glanz (nach Gardner 60°) | 61 | 53 |
| Blauverschiebung bei Bauknecht-Wechseltest | 1 | 1–2 |

**Patentansprüche**

1. Wässriges Elektrotauchlack-Überzugsmittel, das ein durch Protonisieren mit Säuren wasserverdünnbares organisches Kunstharz-Bindemittel, enthaltend eine organische aminhaltige Kunstharzkomponente und Vernetzungsmittel, sowie Katalysatoren für die thermische Vernetzung und gegebenenfalls Pigmente, Füllstoffe, Korrosionsinhibitoren, übliche Lackhilfsmittel und, in einer Menge bis zu 20 Gew.-%, bezogen auf das Gesamtgewicht des Überzugsmittels, organische Lösemittel enthält, dadurch gekennzeichnet, dass es als Bindemittel enthält:

(A) 95 bis 50 Gew.-%, bezogen auf die Gesamtmenge des Bindemittels, primäre und/oder sekundäre Hydroxylgruppen und primäre, sekundäre und/oder tertiäre Aminogruppen enthaltendes organisches fremdvernetzendes Kunstharz-Bindemittel mit einer Hydroxylzahl von 50 bis 400, einer Aminzahl von 30 bis 150 und einer mittleren Molmasse ($\bar{M}n$) von etwa 250 bis 10000, und

(B) 5 bis 50 Gew.-% Vernetzungsmittelgemisch aus

(a) blockierten Polyisocyanaten und

(b) umesterungsfähigen Vernetzungsmitteln mit mindestens zwei Estergruppen pro Molekül, die in neutralem wässrigen Medium weitgehend stabil sind, jedoch im basischen Medium bei Temperaturen über etwa 140 °C zur Umamidierung und/oder zur Umesterung mit der Komponente (A) befähigt sind,

in einem Mischungsverhältnis (a):(b) von 1:20 bis 20 zu 1 Gewichtsteilen, und

(C) gegebenenfalls bis zu 30 Gew.-%, bezogen auf das Gesamtgewicht der Komponenten (A) und (B), hydroxyfunktionelle Harze mit einer OH-Zahl von 30 bis 500 und einer mittleren Molmasse ($\bar{M}n$) von 300 bis 5000.

2. Überzugsmittel nach Anspruch 1, dadurch gekennzeichnet, dass das Mischungsverhältnis (a):(b) im Bereich 1:4 bis 4:1 liegt.

3. Überzugsmittel nach Anspruch 1, dadurch gekennzeichnet, dass das Mischungsverhältnis (a):(b) im Bereich 1:2 bis 2:1 liegt.

4. Überzugsmittel nach einem oder mehreren der Ansprüche 1 bis 3, dadurch gekennzeichnet, dass die Komponente (A) Amino-Epoxidharze sind.

5. Überzugsmittel nach einem oder mehreren der Ansprüche 1 bis 4, dadurch gekennzeichnet, dass die Komponente (A) Amino-Poly(meth)acrylatharze sind.

6. Überzugsmittel nach einem oder mehreren der Ansprüche 1 bis 5, dadurch gekennzeichnet, dass an Stelle des Vernetzungsmittelgemisches aus (A) und (B) Vernetzungsmittel-Verbindungen verwendet werden, die blockierte Polyisocyanat-Gruppen und umesterungsfähige Estergruppen in einem Zahlenverhältnis von 1:20 bis 20:1 enthalten.

7. Verwendung des Elektrotauchlack-Überzugsmittels gemäss einem oder mehreren der Ansprüche 1 bis 6 zum Beschichten von Gegenständen.

8. Verwendung nach Anspruch 7 zum kathodischen Beschichten von Gegenständen mit elektrisch leitender Oberfläche.

## Claims

1. Aqueous electrocoating composition which comprises an organic resin binder, water-dilutable as a result of protonization by acids and containing an organic amine-containing resin component and a crosslinking agent, which composition further comprises catalysts for the thermal crosslinking and, optionally, pigments, fillers, corrosion inhibitors, conventional paint auxiliary agents and organic solvents in an amounts of up to 20% by weight based on the total weight of the composition, characterized in that the composition contains as the binder:

(A) 95 to 50% by weight, based on the total amount of the binder, of an organic non-self-crosslinking resin binder with a hydroxyl value of 50 to 400, an amine value of 30 to 150 and an average molecular mass ($\bar{M}n$) from about 250 to 10,000, containing primar and/or secondary hydroxyl groups and primary, secondary and/or tertiary amino groups, and

(B) 5 to 50% by weight of a mixture of crosslinking agents from

(a) blocked polyisocyanates and

(b) crosslinking agents capable of transesterification having at least two ester groups per molecule, which are largely stable in a neutral aqueous medium and yet in a basic medium at temperatures of above 140 °C are capable of transamination and/or transesterification with the component (A),

(a) and (b) being present in a ratio of from 1:20 to 20:1 parts by weight, and

(C) optionally, up to 30% by weight based on the total weight of the components (A) and (B), of hydroxylic resins with a hydroxyl value of from 30 to 500 and an average molecular mass ($\bar{M}n$) of from 300 to 5000.

2. Coating composition according to claim 1, characterized in that the ratio of (a):(b) is in the region of from 1:4 to 4:1.

3. Coating composition according to claim 1, characterized in that the ratio of (a):(b) is in the region of from 1:2 to 2:1.

4. Coating composition according to one or more of claims 1 to 3, characterized in that the components (A) are aminoepoxy resins.

5. Coating composition according to one or more of claims 1 to 4, characterized in that the components (A) are aminopoly(meth)acrylate resins.

6. Coating composition according to one or more of claims 1 to 5, characterized in that instead of the mixture of crosslinking agents from (A) and (B), crosslinking agent compounds are employed which contain blocked polyisocyanate groups and ester groups capable of transesterification in a numerical ratio of from 1:20 to 20:1.

7. Use of the electrocoating composition according to one or more of claims 1 to 6 for the coating of objects.

8. Use according to claim 7 for the cathodic coating of objects having an electrically conducting surface.

## Revendications

1. Produit de revêtement aqueux pour électrodéposition en immersion contenant un liant de résine synthétique organique diluable à l'eau par protonisation à l'aide d'acides, contenant un composant résine synthétique organique aminé et des agents réticulants, ainsi que des catalyseurs pour la réticulation à la chaleur et le cas échéant des pigments, de matières de charge, des inhibiteurs de corrosion, des produits auxiliaires usuels pour peintures et vernis et, en quantité allant jusqu'à 20% en poids, par rapport au poids total du produit de revêtement, des solvants organiques, caractérisé en ce qu'il contient en tant que liant:

A) 95 à 50% en poids, par rapport à la quantité totale du liant, d'un liant de résine synthétique organique réticulant sous l'action d'agents étrangers, contenant des groupes hydroxy primaires et/ou secondaires et des groupes amino primaires, secondaires et/ou tertiaires, avec un indice d'hydroxyle de 50 à 400, un indice d'amine de 30 à 150, et un poids moléculaire moyen ($\bar{M}n$) d'environ 250 à 10 000, et

B) 5 à 50% en poids d'un mélange d'agents réticulants consistant en

a) des polyisocyanates bloqués et

b) des agents réticulants transestérifiables à au moins deux groupes ester par molécule, pratiquement stables en milieu aqueux neutre mais aptes à une transamidation et/ou à une transestérification avec le composant A) en milieu basique aux températures supérieures à 140 °C environ,

dans des proportions relatives a):b) de 1:20 à 20:1 partie en poids et

C) le cas échéant jusqu'à 30% en poids, par rapport au poids total des composants A) et B), de résines à fonctions hydroxy, avec un indice d'OH de 30 à 500 et un poids moléculaire moyen ($\bar{M}n$) de 300 à 5000.

2. Produit de revêtement selon la revendication 1, caractérisé en ce que les proportions relatives a):b) se situent dans l'intervalle de 1:4 à 4:1.

3. Produit de revêtement selon la revendication 1, caractérisé en ce que les proportions relatives a):b) se situent dans l'intervalle de 1:2 à 2:1.

4. Produit de revêtement selon une ou plusieurs des revendications 1 à 3, caractérisé en ce que le composant A) consiste en résines amino-époxydiques.

5. Produit de revêtement selon une ou plusieurs des revendications 1 à 4, caractérisé en ce que le composant A) consiste en résines d'amino-poly-(meth)acrylates.

6. Produit de revêtement selon une ou plusieurs des revendications 1 à 5, caractérisé en ce que, à la place du mélange d'agents réticulants consistant en A) et B), on utilise des combinaisons d'agents réticulants contenant des groupes polyisocyanate bloqués et des groupes ester transestérifiables dans des proportions relatives en nombre de 1:20 à 20:1.

7. Utilisation du produit de revêtement pour électrodéposition en immersion selon une ou plusieurs des revendications 1 à 6 pour le revêtement d'objets.

8. Utilisation selon la revendication 7, pour le revêtement cathodique d'objets à surface conductrice de l'électricité.